# EUROPEAN PATENT APPLICATION

(11) **EP 4 794 435 A1**
(43) Date of publication of application: **19.08.2026**
(21) Application number: 24881435.2
(22) Date of filing: 11.10.2024
(51) Int. Cl.: H04W 72/542

(54) **COMMUNICATION METHOD AND SYSTEM**

(30) Priority: 26.10.2023 CN 202311404494
(71) Applicant: HUAWEI TECHNOLOGIES CO., LTD., Shenzhen 518129 (CN)
(72) Inventor: YU, Long, Shenzhen, Guangdong 518129 (CN); CUI, Yuke, Shenzhen, Guangdong 518129 (CN); WANG, Yi, Shenzhen, Guangdong 518129 (CN)
(74) Representative: Körber, Martin Hans
(86) International application number: PCT/CN2024/124271
(87) International publication number: WO 2025/087069

(57) **Abstract**

A communication method and system are provided. The system includes at least one first terminal, at least one second terminal, and an access network device. The first terminal is configured to send first information to the access network device., where the first information indicates a channel matrix sequence corresponding to the first terminal, and this sequence includes M+N channel matrices arranged in chronological order. The second terminal is configured to send channel state information CSI to the access network device. The access network device is configured to determine, based on the channel matrix sequence corresponding to the first terminal and the CSI, a channel matrix sequence corresponding to the second terminal, and to send data to the second terminal based on the channel matrix sequence corresponding to the second terminal. This communication system mitigates the impact of channel aging on communication performance, thereby improving communication quality in a high-speed mobility scenario.

## Description

### CROSS-REFERENCE TO RELATED APPLICATIONS

This application claims priority to Chinese Patent Application No. 202311404494.5, filed with the China National Intellectual Property Administration on October 26, 2023 and entitled "COMMUNICATION METHOD AND SYSTEM", which is incorporated herein by reference in its entirety.

### TECHNICAL FIELD

This application relates to the communication field, and in particular, to a communication method and system.

### BACKGROUND

Over the past two decades, China's high-speed railway (briefly referred to as a high-speed railway below) technology has made continuous breakthroughs, with speeds of high-speed trains steadily increasing to 200 to 300 km/h or even higher. While the increase in the speeds of the high-speed trains brings convenience to public travel, it has posed higher requirements and challenges for wireless communication systems.

High-speed mobility causes rapid changes in user location and channel conditions. Consequently, measurement information obtained by a base station quickly becomes outdated and no longer matches actual channel information, potentially affecting communication performance.

### SUMMARY

Embodiments of this application provide a communication method and system to address the issue of measurement information aging.

According to a first aspect, this application provides a communication system. The communication system includes at least one first terminal, at least one second terminal, and an access network device. The at least one first terminal is located at a front end of a vehicle in a traveling direction, and the at least one second terminal is located within the vehicle. The first terminal is configured to send first information to the access network device. The first information indicates a channel matrix sequence corresponding to the first terminal, the channel matrix sequence corresponding to the first terminal includes M+N channel matrices arranged in chronological order, the M+N channel matrices are in a one-to-one correspondence with M+N time units, and M channel matrices among the M+N channel matrices are obtained by performing channel measurement in M time units among the M+N time units, remaining N channel matrices among the M+N channel matrices are obtained through prediction performed based on the M channel matrices, and M and N are positive integers. The second terminal is configured to send CSI to the access network device. The access network device is configured to determine, based on the channel matrix sequence corresponding to the first terminal and the CSI, a channel matrix sequence corresponding to the second terminal. The access network device is configured to send data to the second terminal based on the channel matrix sequence corresponding to the second terminal.

Based on the foregoing communication system, the first information provided by the first terminal may indicate a channel matrix obtained through prediction. In this case, the access network device determines, based on the channel matrix sequence corresponding to the first terminal and the CSI from the second terminal, the channel matrix sequence corresponding to the second terminal, and the channel matrix sequence corresponding to the second terminal and that is obtained by the access network device may include a channel matrix at a future moment. In this case, when the access network device sends the data to the second terminal, the access network device may send the data to the second terminal based on the channel matrix sequence corresponding to the second terminal. This mitigates the impact of channel aging on communication performance and improves communication quality in a high-speed mobility scenario. In addition, the second terminal does not need to have a strong processing capability or prediction capability, or the second terminal does not need to be improved, thereby reducing costs.

In a possible implementation, the access network device is configured to determine based on the channel matrix sequence corresponding to the first terminal and the CSI, a first time interval, where the first time interval is an interval between a time unit corresponding to a first channel matrix and a time unit corresponding to a 1^{st} channel matrix in the channel matrix sequence corresponding to the first terminal, and the first channel matrix is a channel matrix that is in the channel matrix sequence corresponding to the first terminal and that matches the CSI; and determine, based on the first time interval and the channel matrix sequence corresponding to the first terminal, the channel matrix sequence corresponding to the second terminal.

The first time interval may be determined by using the foregoing access network device, and the first time interval can reflect a location relationship between the first terminal and the second terminal.

In a possible implementation, the access network device is configured to: when determining, based on the first time interval and the channel matrix sequence corresponding to the first terminal, the channel matrix sequence corresponding to the second terminal, determine, based on the CSI, the first time interval, and the channel matrix sequence corresponding to the first terminal, the channel matrix sequence corresponding to the second terminal.

In a possible implementation, the access network device is further configured to determine, based on the channel matrix sequence corresponding to the first terminal, information characteristic information respectively corresponding to the M+N channel matrices; and determine the first channel matrix based on the information characteristic information respectively corresponding to the M+N channel matrices and the CSI.

In a possible implementation, each piece of information characteristic information includes at least one of the following: a channel matrix eigenvalue, a channel beam direction feature, a PMI, or CQI.

In a possible implementation, a feedback cycle of the first information includes K time units, the M+N time units belong to the K time units, and K is a positive integer.

In a possible implementation, the first terminal is configured to generate the first information using a codebook compression method.

In a possible implementation, the access network device is further configured to send configuration information to the first terminal, and the configuration information includes at least one of the following: the feedback cycle of the first information, a value of M, or a value of N.

According to a second aspect, this application provides a communication method. The method may be performed by a first terminal or a module (for example, a chip) in the first terminal. The method includes: performing, by a first terminal, channel measurement in M time units to obtain M channel matrices, where the M channel matrices are in a one-to-one correspondence with the M time units, and M is a positive integer; determining, by the first terminal, N channel matrices based on the M channel matrices, where the N channel matrices are in a one-to-one correspondence with N time units, the N time units are different from the M time units, and N is a positive integer; and sending, by the first terminal, first information to an access network device, where the first information indicates a channel matrix sequence corresponding to the first terminal, the channel matrix sequence corresponding to the first terminal includes M+N channel matrices arranged in chronological order, and the M+N channel matrices include the M channel matrices and the N channel matrices.

Based on the foregoing method, the first terminal can obtain a channel matrix through measurement, and predict, based on the channel matrix obtained through measurement, a channel matrix corresponding to another time unit, so that the channel matrix can be fed back at a fine granularity.

In a possible implementation, a feedback cycle of the first information includes K time units, the M time units and the N time units all belong to the K time units, and K is a positive integer.

In a possible implementation, the method further includes: generating, by the first terminal, the first information using a codebook compression method.

In a possible implementation, the method further includes: receiving, by the first terminal, configuration information from the access network device, where the configuration information includes at least one of the following: the feedback cycle of the first information, a value of M, or a value of N.

According to a third aspect, this application provides a communication method. The method may be performed by an access network device or a module (for example, a chip) in the access network device. The method includes: receiving, by an access network device, first information from a first terminal, where the first information indicates a channel matrix sequence corresponding to the first terminal, the channel matrix sequence corresponding to the first terminal includes M+N channel matrices arranged in chronological order, the M+N channel matrices are in a one-to-one correspondence with M+N time units, M channel matrices among the M+N channel matrices are obtained by performing channel measurement in M time units among the M+N time units, remaining N channel matrices among the M+N channel matrices are obtained through prediction performed based on the M channel matrices, and M and N are positive integers; receiving, by the access network device, CSI from a second terminal; determining, by the access network device based on the channel matrix sequence corresponding to the first terminal and the CSI, a channel matrix sequence corresponding to the second terminal; and sending, by the access network device, data to the second terminal based on the channel matrix sequence corresponding to the second terminal.

Based on the foregoing method, the access network device determines, based on the channel matrix sequence corresponding to the first terminal and the CSI from the second terminal, the channel matrix sequence corresponding to the second terminal. When the access network device sends the data to the second terminal, the access network device may send the data to the second terminal based on the channel matrix sequence corresponding to the second terminal. This mitigates the impact of channel aging on communication performance and improves communication quality in a high-speed mobility scenario. In addition, the second terminal does not need to have a strong processing capability or prediction capability, or the second terminal does not need to be improved, thereby reducing costs.

In a possible implementation, when the access network device determines, based on the channel matrix sequence corresponding to the first terminal and the CSI, the channel matrix sequence corresponding to the second terminal, the access network device determines a first time interval based on the channel matrix sequence corresponding to the first terminal and the CSI, where the first time interval is an interval between a time unit corresponding to a first channel matrix and a time unit corresponding to a 1^{st} channel matrix in the channel matrix sequence corresponding to the first terminal, and the first channel matrix is a channel matrix that is in the channel matrix sequence corresponding to the first terminal and that matches the CSI. The access network device determines, based on the first time interval and the channel matrix sequence corresponding to the first terminal, the channel matrix sequence corresponding to the second terminal.

In a possible implementation, when the access network device determines, based on the first time interval and the channel matrix sequence corresponding to the first terminal, the channel matrix sequence corresponding to the second terminal, the access network device determines, based on the CSI, the first time interval, and the channel matrix sequence corresponding to the first terminal, the channel matrix sequence corresponding to the second terminal.

In a possible implementation, the method further includes: determining, by the access network device based on the channel matrix sequence corresponding to the first terminal, information characteristic information respectively corresponding to the M+N channel matrices; and determining the first channel matrix based on the information characteristic information respectively corresponding to the M+N channel matrices and the CSI.

In a possible implementation, each piece of information characteristic information includes at least one of the following: a channel matrix eigenvalue, a channel beam direction feature, a PMI, or CQI.

According to a fourth aspect, this application provides a communication apparatus. The apparatus is a first terminal or a module (for example, a chip) in the first terminal. The apparatus includes: a processing unit, configured to perform channel measurement in M time units to obtain M channel matrices, where the M channel matrices are in a one-to-one correspondence with the M time units, and M is a positive integer; and determine N channel matrices based on the M channel matrices, where the N channel matrices are in a one-to-one correspondence with N time units, the N time units are different from the M time units, and N is a positive integer; and a transceiver unit, configured to send first information to an access network device, where the first information indicates a channel matrix sequence corresponding to the first terminal, the channel matrix sequence corresponding to the first terminal includes M+N channel matrices arranged in chronological order, and the M+N channel matrices include the M channel matrices and the N channel matrices.

In a possible implementation, a feedback cycle of the first information includes K time units, the M time units and the N time units all belong to the K time units, and K is a positive integer.

In a possible implementation, the processing unit is configured to generate the first information using a codebook compression method.

In a possible implementation, the transceiver unit is configured to receive configuration information from the access network device, where the configuration information includes at least one of the following: the feedback cycle of the first information, a value of M, or a value of N.

According to a fifth aspect, this application provides a communication apparatus. The apparatus is a first terminal or a module (for example, a chip) in the first terminal. The apparatus includes: a transceiver unit, configured to receive first information from the first terminal, where the first information indicates a channel matrix sequence corresponding to the first terminal, the channel matrix sequence corresponding to the first terminal includes M+N channel matrices arranged in chronological order, the M+N channel matrices are in a one-to-one correspondence with M+N time units, M channel matrices among the M+N channel matrices are obtained by performing channel measurement in M time units among the M+N time units, remaining N channel matrices among the M+N channel matrices are obtained through prediction performed based on the M channel matrices, and M and N are positive integers; and receive CSI from a second terminal; and a processing unit, configured to determine, based on the channel matrix sequence corresponding to the first terminal and the CSI, a channel matrix sequence corresponding to the second terminal. The transceiver unit is configured to send data to the second terminal based on the channel matrix sequence corresponding to the second terminal.

In a possible implementation, the processing unit is configured to: when determining, based on the channel matrix sequence corresponding to the first terminal and the CSI, determine the channel matrix sequence corresponding to the second terminal, determine based on the channel matrix sequence corresponding to the first terminal and the CSI, a first time interval, where the first time interval is an interval between a time unit corresponding to a first channel matrix and a time unit corresponding to a 1st channel matrix in the channel matrix sequence corresponding to the first terminal, and the first channel matrix is a channel matrix that is in the channel matrix sequence corresponding to the first terminal and that matches the CSI; and determine, based on the first time interval and the channel matrix sequence corresponding to the first terminal, the channel matrix sequence corresponding to the second terminal.

In a possible implementation, the processing unit is configured to: when determining, based on the first time interval and the channel matrix sequence corresponding to the first terminal, the channel matrix sequence corresponding to the second terminal, determine, based on the CSI, the first time interval, and the channel matrix sequence corresponding to the first terminal, the channel matrix sequence corresponding to the second terminal.

In a possible implementation, the processing unit is further configured to determine, based on the channel matrix sequence corresponding to the first terminal, information characteristic information respectively corresponding to the M+N channel matrices; and determine the first channel matrix based on the information characteristic information respectively corresponding to the M+N channel matrices and the CSI.

In a possible implementation, each piece of information characteristic information includes at least one of the following: a channel matrix eigenvalue, a channel beam direction feature, a PMI, or CQI.

According to a sixth aspect, this application provides a communication apparatus. The communication apparatus may be a first apparatus, or may be a module or unit (such as a chip, a chip system, or a circuit) that is in the first apparatus and that is in a one-to-one correspondence with the method/operations/steps/actions described in either the second aspect or the third aspect, or may be used in a matching manner with the first apparatus.

According to a seventh aspect, this application provides a communication device, including at least one processing element and at least one storage element. The at least one storage element is configured to store a program and data. The at least one processing element is configured to read and execute the program and the data that are stored in the storage element, so that the method described in either the second aspect or the third aspect of this application is implemented.

According to an eighth aspect, this application further provides a computer program. When the computer program runs on a computer, the computer is enabled to perform the method described in either the second aspect or the third aspect.

According to a ninth aspect, this application provides a communication apparatus. The apparatus includes an interface circuit and at least one processor. The interface circuit is configured to provide an input and/or output of a program or instructions for the at least one processor. The at least one processor is configured to execute the program or the instructions, so that the communication apparatus can implement the method described in either the second aspect or the third aspect.

In a possible manner, the communication apparatus includes the at least one memory, and the at least one memory is configured to store the program or the instructions.

According to a tenth aspect, this application provides a computer storage medium. The storage medium stores a software program, and when the software program is read and executed by one or more processors, the method described in either the second aspect or the third aspect may be implemented.

According to an eleventh aspect, this application provides a computer program product including instructions. When the instructions are run on a computer, the computer is enabled to perform the method described in either the second aspect or the third aspect.

According to a twelfth aspect, this application provides a chip system. The chip system includes at least one chip and a memory. The at least one chip is configured to read and execute a program stored in the memory, to implement the method described in either the second aspect or the third aspect.

In this application, based on the implementations provided in the foregoing aspects, the implementations may further be combined to provide more implementations.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of an architecture of a mobile communication system to which embodiments of this application are applied;
FIG. 2 is a diagram of communication between a base station and a terminal in high-speed motion according to this application;
FIG. 3 is a diagram of communication between a common terminal and a base station through a CPE according to this application;
FIG. 4 is a diagram of a communication system according to this application;
FIG. 5 is a general flowchart of a communication method according to this application;
FIG. 6 is a diagram of a structure of first information according to this application;
FIG. 7 is a diagram 1 of determining a first time interval according to this application;
FIG. 8 is a diagram 2 of determining a first time interval according to this application;
FIG. 9 is a diagram of sliding window matching according to this application;
FIG. 10 is a diagram of a structure of a communication apparatus according to this application; and
FIG. 11 is a diagram of a structure of another communication apparatus according to this application.

### DESCRIPTION OF EMBODIMENTS

The following describes specific implementations of this application by using examples with reference to the accompanying drawings in embodiments of this application. However, the implementations of this application may further include a combination of the embodiments without departing from the spirit or scope of this application. For example, other embodiments may be used and structural changes may be made. Therefore, the detailed description of the following embodiments should not be understood in a restrictive sense. Terms used in embodiments of this application are merely used to describe specific embodiments of this application, but are not intended to limit this application.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunication system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

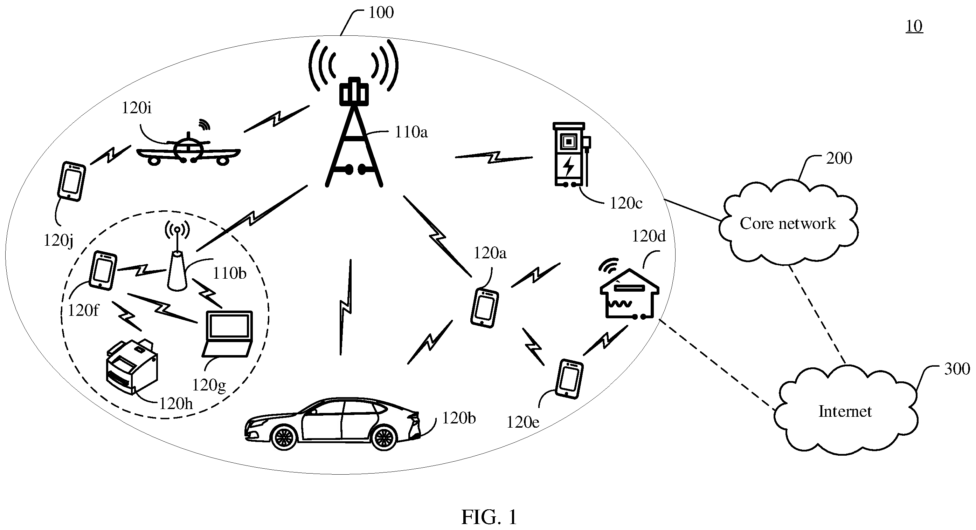

FIG. 1 is a diagram of an architecture of a communication system 10 to which embodiments of this application are applied. As shown in FIG. 1, the communication system includes a radio access network 100 and a core network 200. Optionally, the communication system 10 may further include the Internet 300. The radio access network 100 may include at least one radio access network device (such as 110a and 110b in FIG. 1), and may further include at least one terminal (such as 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein completes functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. Neither of a specific technology and a specific device form that are used by the radio access network device is limited in embodiments of this application. For ease of description, the following uses an example in which an access network device is used as the radio access network device for description.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of Things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. Neither of a specific technology and a specific device form used by the terminal is limited in embodiments of this application.

The access network device and the terminal may be in fixed locations, or may be movable. The access network device and the terminal may be deployed on land, including being indoor, being outdoor, being hand-held, or being vehicle-mounted; may be deployed on water; or may be deployed on an airplane, a balloon, and an artificial satellite. Application scenarios of the access network device and the terminal are not limited in embodiments of this application.

Roles of the access network device and the terminal may be relative. For example, the helicopter or the unmanned aerial vehicle 120i in FIG. 1 may be configured as a mobile access network device. For the terminal 120j accessing the radio access network 100 through 120i, the unmanned aerial vehicle 120i is an access network device. However, for the access network device 110a, 120i is a terminal. In other words, 110a communicates with 120i by using a radio air interface protocol. Certainly, 110a and 120i may alternatively communicate with each other by using an interface protocol between access network devices. In this case, for 110a, 120i is also an access network device. Therefore, both the access network device and the terminal may be collectively referred to as communication apparatuses. 110a and 110b in FIG. 1 may be referred to as communication apparatuses having the functions of the access network device, and 120a to 120j in FIG. 1 may be referred to as communication apparatuses having the functions of the terminal.

Communication between an access network device and a terminal, between access network devices, or between terminals may be performed through a licensed spectrum, an unlicensed spectrum, or both a licensed spectrum and an unlicensed spectrum; and communication may be performed through a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, functions of the access network device may alternatively be executed by a module (for example, a chip) in the access network device, or may alternatively be executed by a control subsystem including the functions of the access network device. The control subsystem including the functions of the access network device herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus including the function of the terminal.

In embodiments of this application, the access network device sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely examples of a downlink data channel, a downlink control channel, an uplink control channel, and an uplink data channel. In different systems and different scenarios, a data channel and a control channel may have different names. This is not limited in embodiments of this application.

When a carrier center frequency (f_{c}) is fixed, a maximum Doppler frequency shift (f_{Doppler}) of a channel is directly proportional to a moving speed (v) of a high-speed train, where c is a speed of light. A theoretical channel coherence time (T_{c}) often indicates stability of a radio channel in a time dimension, and is inversely proportional to a Doppler frequency shift. ${f}_{Doppler} = {f}_{c} \frac{V}{C}$ ${T}_{c} = \sqrt{\frac{9}{16 {πf}_{Doppler}^{2}}}$

In a high-speed mobility scenario, high-speed mobility causes a large Doppler frequency shift, and a channel changes rapidly. The theoretical channel coherence time is far less than channel state information (channel state information reference signal, CSI-RS) that can currently be supported.

A CSI-RS measurement and feedback cycle is shown in Table 1.

**Table 1 Theoretical channel coherence time at different moving speeds**

| | | | |
|---|---|---|---|
| Moving speed (km/h) | 100 | 200 | 300 |
| Theoretical channel coherence time (ms) | 2.1 | 1.1 | 0.72 |

High-speed mobility causes rapid changes in user location and channel conditions. Consequently, measurement information obtained by a base station quickly becomes outdated and no longer matches actual channel information. This amplifies a performance loss caused by codebook mismatch due to a channel time-variation.

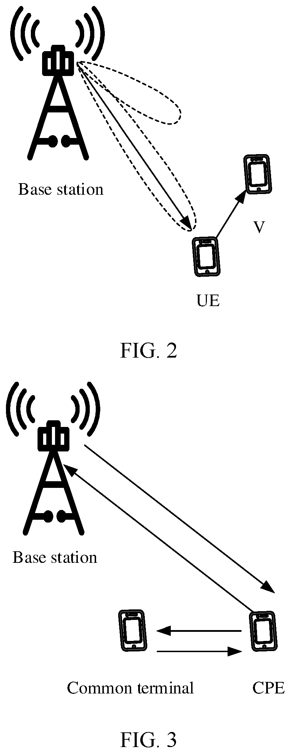

As shown in FIG. 2, a base station selects a beam (or a codebook) for UE. Because the UE moves at a high speed, the selected beam (or codebook) no longer matches a current location of the UE, causing a severe communication performance loss.

To resolve this problem, a most important factor is to enable the base station side to obtain fine-grained channel information. A simplest method is to reduce a feedback cycle of the CSI-RS, enabling the base station side to obtain channel information matching an actual channel. Simply put, this means to increase a frequency of back channel state information (channel state information, CSI) measurement and feedback from a terminal, that is, a plurality of measurements and a plurality of feedbacks. However, reducing the feedback cycle leads to a significant increase in feedback overhead. It can be learned that the method of a plurality of measurements and a plurality of feedbacks is not feasible.

In addition, it further needs to be ensured that a sum Tᵣ of a measurement and feedback time on a terminal side and a feedback information parsing time on the base station side is less than or equal to a channel coherence time T_{c} in a high-speed mobility scenario, so that the base station can obtain the fine-grained channel information in time.

Currently, there is a train-to-ground system coverage solution, which is shown in FIG. 3. A main principle of the solution is to implement high-speed data backhaul by mounting customer-premises equipment (customer-premises equipment, CPE) on a train. Specific implementation procedures of the solution include: A common terminal on the train first performs a communication interaction with the CPE on the train, and then the CPE on the train performs a communication interaction with an external base station (for example, an active antenna unit (active antenna unit, AAU)), where the common terminal performs no communication interaction with the external base station.

The CPE is a mobile signal access device that receives a mobile signal and forwards the mobile signal as a wireless Wi-Fi signal. The CPE is a device that can convert a high-speed 4G/5G signal into a Wi-Fi signal and can support a large quantity of mobile terminals that access the Internet at the same time. The CPE can be widely used in rural areas, towns, hospitals, enterprises, factories, residential areas, and the like, and can be used for wireless network access, so that broadband costs can be reduced and cabling can be eliminated.

It can be learned from the foregoing process that a function of the CPE is equivalent to mounting a mobile relay on the train. After the common terminal on the train completes an interaction with the CPE, the CPE performs a communication interaction with the external base station. Although communication quality of the common terminal can be improved, a channel aging problem caused by a high Doppler frequency shift in a high-speed mobility scenario is not improved. In other words, the channel aging problem still exists in communication between the CPE and the external base station.

Based on the network system architecture shown in FIG. 1 and content described in the foregoing related technologies, embodiments of this application provide several possible communication methods. An example in which the communication methods are performed by an access network device and a terminal is used. For example, the access network device may be the access network device 110a or the access network device 110b in FIG. 1. The terminal may be any terminal shown in FIG. 1. In addition, it should be understood that the access network device may alternatively be replaced with a communication apparatus having a function of the access network device, or a chip, a unit, or a module in the communication apparatus having the function of the access network device. The terminal may alternatively be replaced with a communication apparatus having a function of the terminal, or a chip, a unit, or a module in the communication apparatus having the function of the terminal.

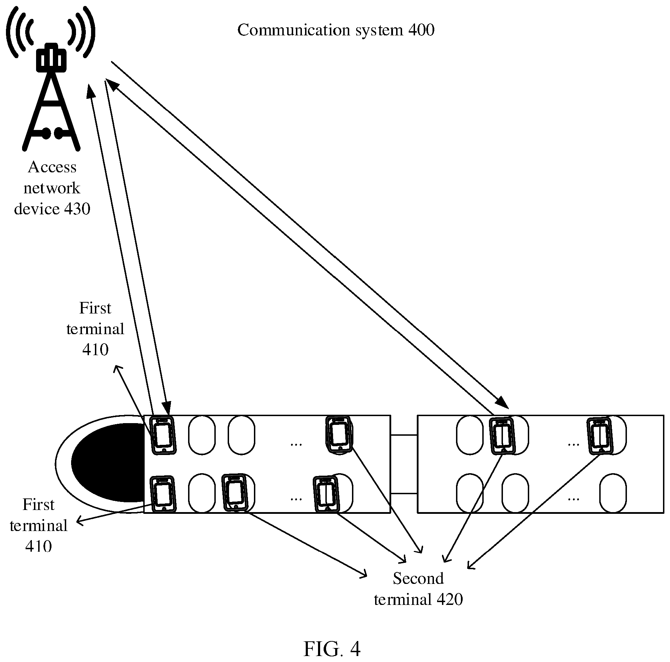

FIG. 4 is an example of a possible schematic flowchart of a communication system according to an embodiment of this application. As shown in FIG. 4, the communication system includes the following.

This application provides a communication system 400. The communication system 400 includes at least one first terminal 410, at least one second terminal 420, and an access network device 430. The at least one first terminal 410 is located at a front end of a vehicle in a traveling direction, and the at least one second terminal 420 is located within the vehicle. For example, the vehicle may be a train, for example, a ground surface vehicle such as a high-speed train or an inter-city rail transit.

The first terminal may be a CPE or another terminal. This is not limited in this application. Generally, the first terminal has stronger communication or processing capabilities than the second terminal.

Both the first terminal and the second terminal may communicate with the access network device. In the traveling direction of the vehicle, the first terminal is located ahead of the second terminal on the vehicle. In other words, assuming that the vehicle needs to pass through a location A, the first terminal arrives at the location A before the second terminal.

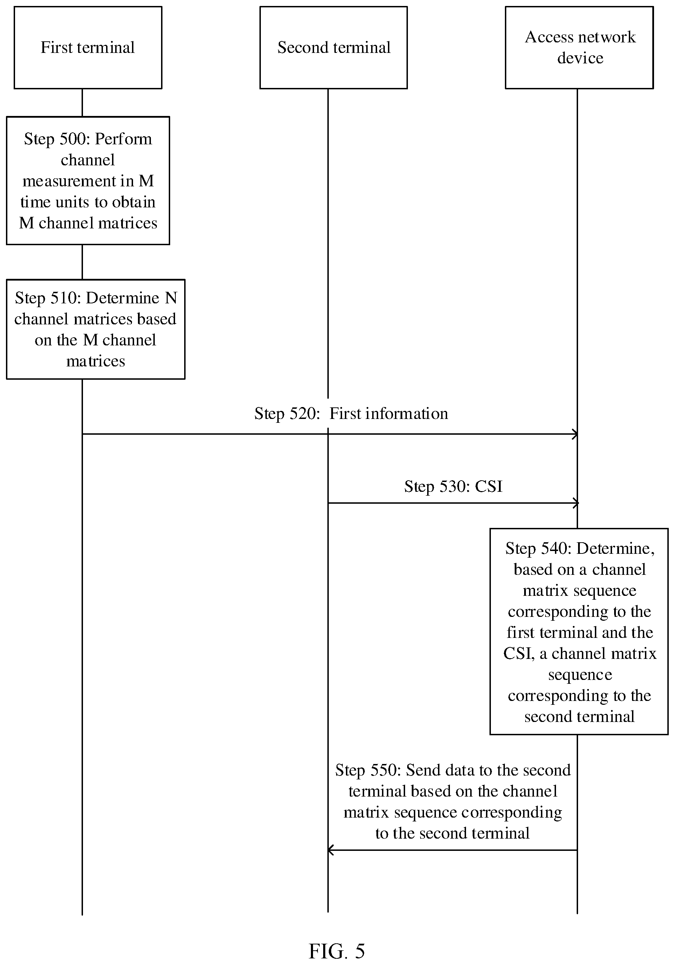

Based on the communication system shown in FIG. 4, FIG. 5 is an example of a possible schematic flowchart of a communication method according to an embodiment of this application. As shown in FIG. 5, the method includes the following steps.

Step 500: A first terminal performs channel measurement in M time units to obtain M channel matrices, where the M channel matrices are in a one-to-one correspondence with the M time units, and M is a positive integer.

For example, in this application, each time unit may include one or more transmission time intervals (transmission time interval, TTI). A quantity of TTIs included in each time unit may be determined based on a measurement capability and/or a prediction capability of the first terminal.

Step 510: The first terminal determines N channel matrices based on the M channel matrices, where the N channel matrices are in a one-to-one correspondence with N time units, the N time units are different from the M time units, and N is a positive integer.

It may be understood that the first terminal may perform prediction based on the M channel matrices obtained through measurement, to obtain the N channel matrices. In other words, the N channel matrices herein are not channel matrices obtained through real measurement. Specific values of M and N are not limited in this application.

It may also be understood that the M channel matrices are channel matrices at a current moment that are measured by the first terminal, and the N channel matrices are channel matrices at a future moment that are predicted by the first terminal.

In a possible implementation, the first terminal may perform an adjustment based on an actual situation and/or a capability of the first terminal.

In another possible implementation, an access network device may send configuration information to the first terminal. The configuration information includes at least one of the following: a feedback cycle of first information, a value of M, or a value of N. Alternatively, at least one of the feedback cycle of the first information, the value of M, or the value of N may be agreed on by using a protocol, or may be determined by the access network device and the first terminal through negotiation.

For example, the feedback cycle of the first information includes K time units, the M time units and the N time units all belong to the K time units, and K is a positive integer. In other words, M + N ≤ K.

For example, the feedback cycle of the first information includes 10 time units, and the first terminal may obtain, through measurement in a first time unit in the feedback cycle, a channel matrix corresponding to the first time unit, where the channel matrix is denoted as a channel matrix 1, and determine, based on the channel matrix, channel matrices respectively corresponding to the other nine time units in the feedback cycle, where the channel matrices are denoted as a channel matrix 2, a channel matrix 3, ..., and a channel matrix 10. In this case, M = 1, N = 9, and K = 10.

For another example, the feedback cycle of the first information includes 10 time units, and the first terminal may obtain, through measurement in a first time unit in the feedback cycle, a channel matrix corresponding to the first time unit, where the channel matrix is denoted as a channel matrix 1, and determine, based on the channel matrix, channel matrices respectively corresponding to a second time unit to an eighth time unit in the feedback cycle, where the channel matrices are denoted as a channel matrix 2, a channel matrix 3, ..., and a channel matrix 8. In this case, M = 1, N = 7, and K = 10.

For example, the first terminal may obtain the N channel matrices through prediction, based on the M channel matrices obtained through measurement, by using a conventional channel prediction algorithm based on Kalman filtering, or a channel prediction algorithm based on artificial intelligence (artificial intelligence, AI) or a neural network.

Step 520: The first terminal sends the first information to the access network device. Correspondingly, the access network device receives the first information from the first terminal.

The first information indicates a channel matrix sequence corresponding to the first terminal, and the channel matrix sequence corresponding to the first terminal includes M+N channel matrices arranged in chronological order.

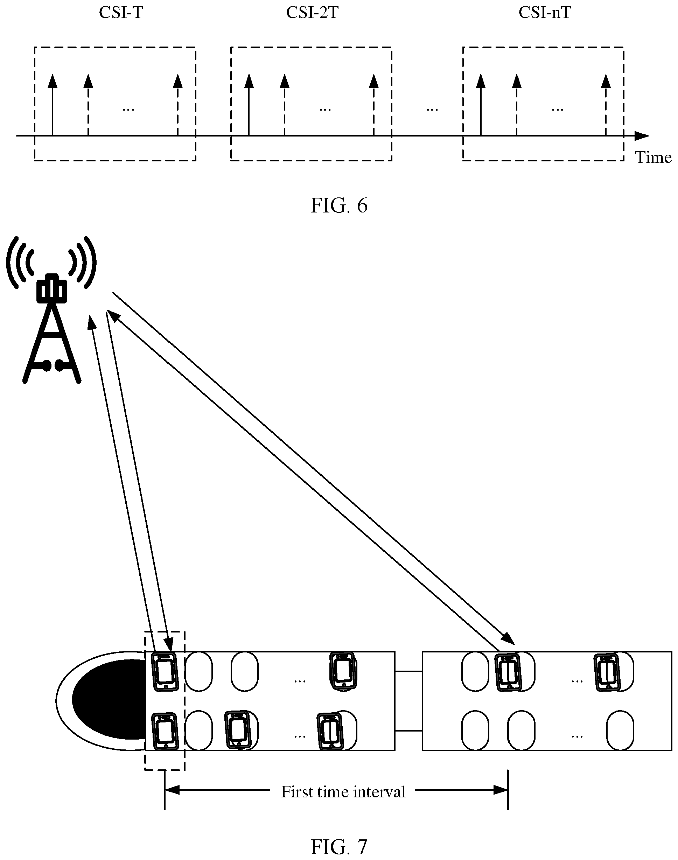

For example, as shown in FIG. 6, a solid line identifies a channel matrix obtained through measurement, a dashed line identifies a channel matrix obtained through prediction, the first information may be CSI fed back by the first terminal, and the feedback cycle of the first information is T.

The first information may be sent in the following manners, but is not limited to the following manners:

In a possible implementation, the first information may directly include the M+N channel matrices arranged in chronological order.

For example, the feedback cycle of the first information includes 10 time units, and the first terminal may obtain, through measurement in a first time unit in the feedback cycle, a channel matrix corresponding to the first time unit, where the channel matrix is denoted as a channel matrix 1, and determine, based on the channel matrix, channel matrices respectively corresponding to the other nine time units in the feedback cycle, where the channel matrices are denoted as a channel matrix 2, a channel matrix 3, ..., and a channel matrix 10.

The first terminal determines that the first information is: {channel matrix 1, channel matrix 2, channel matrix 3, ..., channel matrix 10}.

In another possible implementation, the first terminal generates the first information using a codebook compression method, so that signaling overheads of the first information can be reduced.

For example, the first terminal may use an existing codebook in a current protocol or an evolved codebook in a future protocol. The codebook compression method may be an AI-based compression perception feedback, a time-domain differential compression feedback, or the like. The codebook compression method such as the AI-based compression perception feedback or the time-domain differential compression feedback can reduce redundancy in a space domain dimension, a time domain dimension, or a frequency domain dimension in the first information, thereby reducing feedback overheads. In addition, another codebook compression method may further be used. This is not limited in this application.

In still another possible implementation, the first terminal may consider channel matrix redundancy information in the channel matrix sequence corresponding to the first terminal, and compress and feed back the first information, to reduce signaling overheads of the first information. For example, the channel matrix redundancy information may include redundancy information in a space domain dimension, a time domain dimension, or a frequency domain dimension.

Step 530: The second terminal sends CSI to the access network device. Correspondingly, the access network device receives the CSI from the second terminal.

For example, the CSI herein is CSI of the second terminal.

For example, the CSI herein may include a precoding matrix indicator (precoding matrix indication, PMI), channel quality information (channel quality indicator, CQI), or the like.

Step 540: The access network device determines, based on the channel matrix sequence corresponding to the first terminal and the CSI, a channel matrix sequence corresponding to the second terminal.

In a possible implementation, when the access network device determines, based on the channel matrix sequence corresponding to the first terminal and the CSI from the second terminal, the channel matrix sequence corresponding to the second terminal, the access network device determines a first time interval based on the channel matrix sequence corresponding to the first terminal and the CSI from the second terminal. The first time interval is an interval between a time unit corresponding to a first channel matrix and a time unit corresponding to a 1st channel matrix in the channel matrix sequence corresponding to the first terminal, and the first channel matrix is a channel matrix that is in the channel matrix sequence corresponding to the first terminal and that matches the CSI from the second terminal. The access network device determines, based on the first time interval and the channel matrix sequence corresponding to the first terminal, the channel matrix sequence corresponding to the second terminal.

It may be understood that the access network device may first determine the channel matrix that is in the channel matrix sequence corresponding to the first terminal and that matches the CSI from the second terminal, that is, the first channel matrix.

For example, the access network device determines, based on the channel matrix sequence corresponding to the first terminal, information characteristic information respectively corresponding to the M+N channel matrices, and further determines the first channel matrix based on the information characteristic information respectively corresponding to the M+N channel matrices and the CSI from the second terminal.

For example, the access network device extracts channel characteristic information for the CSI that is from the second terminal, and the channel characteristic information is denoted as channel characteristic information of the second terminal. The access network device extracts a series of channel characteristic information based on the channel matrix sequence corresponding to the first terminal. For example, the series of channel characteristic information includes M+N pieces of channel characteristic information. The M+N pieces of channel characteristic information are in a one-to-one correspondence with the M+N channel matrices. Further, the access network device performs matching on the channel characteristic information of the second terminal and the M+N pieces of channel characteristic information, determines channel characteristic information that is in the M+N pieces of channel characteristic information and that matches the channel characteristic information of the second terminal, and denotes a channel matrix corresponding to the channel characteristic information as the first channel matrix. For example, the access network device may perform channel characteristic information matching by using a sliding window method, to determine the channel characteristic information that is in the M+N pieces of channel characteristic information and that matches the channel characteristic information of the second terminal.

For example, the information characteristic information includes at least one of the following: a channel matrix eigenvalue, a channel beam direction feature, a PMI, or CQI.

After determining the first channel matrix, the access network device may determine the first time interval based on the interval between the time unit corresponding to the first channel matrix and the time unit corresponding to the 1^{st} channel matrix in the channel matrix sequence corresponding to the first terminal.

For example, the first channel matrix is an S^{th} channel matrix in the M+N channel matrices arranged in chronological order, a time unit corresponding to the S^{th} channel matrix is a time unit Y, and the time unit corresponding to the 1^{st} channel matrix in the M+N channel matrices arranged in chronological order is a time unit X. Therefore, the first time interval is a difference between the time unit X and the time unit Y.

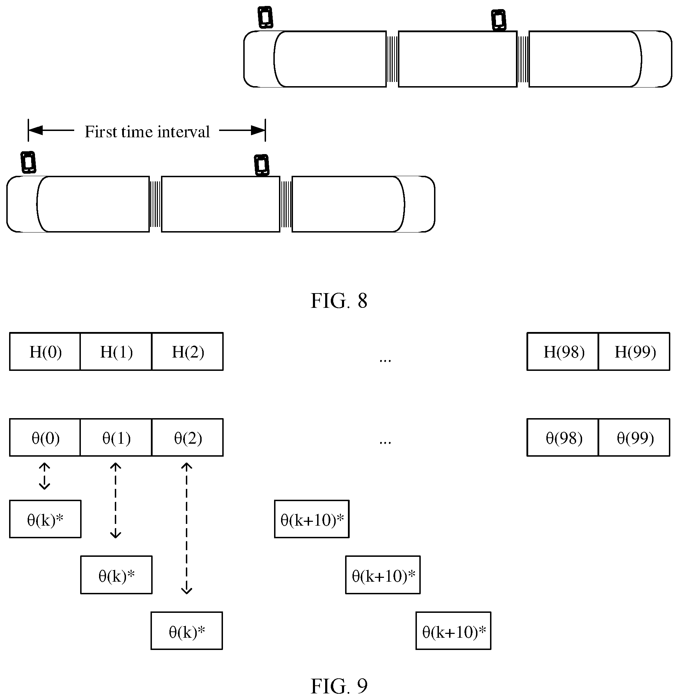

The first information indicates a channel matrix that is at a current moment and that is measured by the first terminal and a predicted channel matrix at a future moment, and the CSI from the second terminal matches the first channel matrix, that is, the CSI from the second terminal matches a channel matrix at a future moment in the first information. As shown in FIG. 7 and FIG. 8, when arriving at a same location, a time interval between the first terminal and the second terminal is the first time interval.

As shown in FIG. 9, it is assumed that a feedback cycle of the CSI is the same as the feedback cycle of the first information and the feedback cycles are both 10 TTIs. The access network device may receive the first information in cycles. It is assumed that each piece of first information indicates 10 channel matrices, and the 10 channel matrices are in a one-to-one correspondence with 10 TTIs. The access network device may obtain 100 channel matrices after receiving the first information for 10 times. The 100 channel matrices may be denoted as {H(0), H(1), H(2), ..., H(98), H(99)}, where 0 to 99 may be used to identify 100 TTIs. Further, channel characteristic information is respectively extracted for the 100 channel matrices, to obtain 100 pieces of channel characteristic information. It is assumed that each piece of channel characteristic information includes a channel beam direction feature, and the 100 pieces of channel characteristic information may be denoted as {θ(0), θ(1), θ(2), ..., 0(98), θ(99)}. In addition, based on one or more pieces of CSI received from the second terminal, assuming that two pieces of CSI are from the second terminal, the access network device extracts channel characteristic information for the two pieces of CSI, to obtain the two pieces of channel characteristic information that may be denoted as {θ(k)*, θ(k+10)*}.

Further, sliding window matching is performed on {θ(0), θ(1), θ(2), ..., θ(98), θ(99)} and {θ(k)*, θ(k+10)*}.

For example, a difference between θ(k)* and θ(0) and a difference between 0(k+10)* and θ(10) are calculated, to obtain an error 0, and a time interval corresponding to the error 0 is 0 TTIs.

A difference between θ(k)* and 0(1) and a difference between θ(k+10)* and θ(11) are calculated, to obtain an error 1, and a time interval corresponding to the error 1 is 1 TTI.

A difference between θ(k)* and θ(2) and a difference between θ(k+10)* and θ(12) are calculated, to obtain an error 2, and a time interval corresponding to the error 2 is 2 TTIs.

...

A difference between θ(k)* and θ(89) and a difference between θ(k+10)* and θ(99) are calculated, to obtain an error 89, and a time interval corresponding to the error 89 is 89 TTIs.

Finally, an error 0, an error 1, an error 2, ..., and an error 89 may be obtained. Each error may be a sum of squares of two differences, an average value of the differences, an average value of absolute values of the differences, or the like. This is not limited in this application.

The access network device may determine a minimum error in the error 0, the error 1, the error 2, ..., and the error 89, and the minimum error is denoted as an error X. A time interval corresponding to the error X is denoted as the first time interval. The access network device may further determine corresponding θ(X) based on the error X, and determine corresponding H(X) based on θ(X), where H(X) is the first channel matrix.

It should be noted that a quantity of times of sliding window matching is 90, and 90 errors are obtained. A maximum quantity of times of sliding window matching may be determined based on a length of a vehicle and a speed of the vehicle. For example, it is assumed that the vehicle is a train. The length of the train is fixed, and the speed of the train may also be obtained in an existing manner. A maximum possible time interval between the first terminal and the second terminal may be determined based on a quotient of the length of the vehicle and the speed of the vehicle, so that the maximum quantity of times of sliding window matching may be determined based on the maximum possible time interval.

After determining the first time interval, the access network device determines, based on the first time interval and the channel matrix sequence corresponding to the first terminal, the channel matrix sequence corresponding to the second terminal.

In an example, based on the first time interval and the channel matrix sequence corresponding to the first terminal, the access network device determines, as the channel matrix sequence corresponding to the second terminal, a channel matrix after the first channel matrix in the M+N channel matrices arranged in chronological order.

In another example, the access network device determines, based on the CSI from the second terminal, the first time interval, and the channel matrix sequence corresponding to the first terminal, the channel matrix sequence corresponding to the second terminal.

For example, the access network device determines, based on the first time interval and the channel matrix sequence corresponding to the first terminal, the channel matrix after the first channel matrix in the M+N channel matrices arranged in chronological order, and further performs feature fusion based on the channel matrix after the first channel matrix in the M+N channel matrices arranged in chronological order and the CSI from the second terminal, to obtain the channel matrix sequence corresponding to the second terminal.

For example, channel beam direction features and a time change rule that are respectively corresponding to the first channel matrix in the M+N channel matrices arranged in chronological order and the channel matrix after the first channel matrix are extracted, and then the channel matrix sequence corresponding to the second terminal or a channel covariance matrix sequence is obtained with reference to the CSI from the second terminal (or a component decomposed from the CSI from the second terminal). The channel covariance matrix is obtained by multiplying the channel matrix by a conjugate transpose of the channel matrix.

For example, assuming that the error 12 determined based on θ(k)* and θ(12) as well as θ(k+10)* and θ(22) in FIG. 9 is a minimum error, the first channel matrix is H(12), and the first time interval is 12. The access network device may separately extract channel beam direction features and a time change rule based on H(12), H(13), H(14), H(15), H(16), H(17), H(18), H(19), H(20), and H(21), determine, with reference to CSI corresponding to θ(k)*, the channel matrix sequence corresponding to the second terminal, where for example, the channel matrix sequence may be denoted as H(12)*, H(13)*, H(14)*, H(15)*, H(16)*, H(17)*, H(18)*, H(19)*, H(20)* and H(21)*, and may further obtain another channel matrix after H(21)* based on a same idea. Details are not described herein again.

It can be learned that the channel matrix sequence corresponding to the second terminal includes a channel matrix at a future moment.

Step 550: The access network device sends data to the second terminal based on the channel matrix sequence corresponding to the second terminal. Correspondingly, the second terminal receives the data from the access network device.

The channel matrix sequence corresponding to the second terminal includes a channel matrix at a future moment, and when the access network device sends the data to the second terminal, the access network device sends the data to the second terminal based on the channel matrix sequence corresponding to the second terminal. Therefore, impact of a channel aging problem on communication performance can be reduced, and communication quality in a high-speed mobility scenario can be improved. In addition, the second terminal does not need to have a strong processing capability or prediction capability, or a common terminal does not need to be improved, thereby reducing costs.

It may be understood that, to implement functions in the foregoing embodiments, the access network device and the first terminal include corresponding hardware structures and/or software modules for executing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

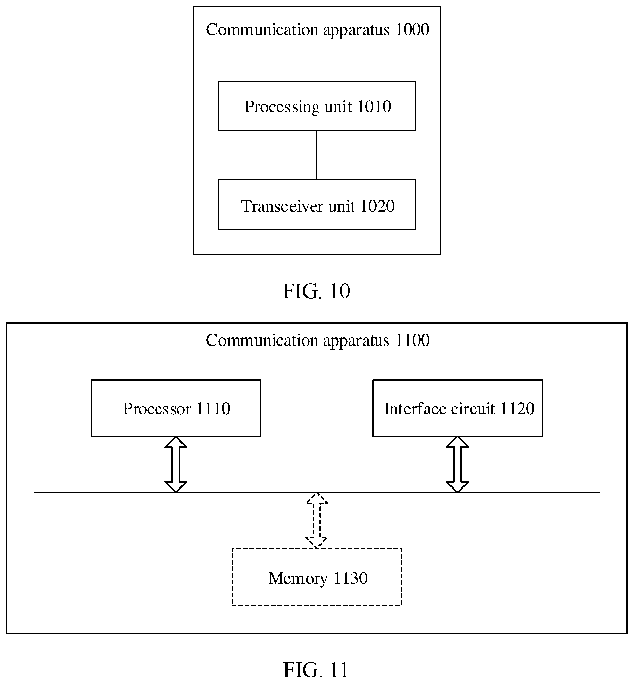

FIG. 10 and FIG. 11 are diagrams of structures of possible communication apparatuses according to embodiments of this application. The communication apparatuses may be configured to implement functions of the access network device and the first terminal in the foregoing method embodiments, and therefore can also implement the beneficial effects of the foregoing method embodiments.

As shown in FIG. 10, the communication apparatus 1000 includes a processing unit 1010 and a transceiver unit 1020. The communication apparatus 1000 is configured to implement functions of the access network device and the first terminal in the foregoing method embodiment shown in FIG. 5.

When the communication apparatus 1000 is configured to implement the function of the first terminal in the foregoing method embodiment shown in FIG. 5:
the processing unit 1010 is configured to perform channel measurement in M time units to obtain M channel matrices, where the M channel matrices are in a one-to-one correspondence with the M time units, and M is a positive integer; and determine N channel matrices based on the M channel matrices, where the N channel matrices are in a one-to-one correspondence with N time units, the N time units are different from the M time units, and N is a positive integer; and
the transceiver unit 1020 is configured to send first information to the access network device, where the first information indicates a channel matrix sequence corresponding to the first terminal, the channel matrix sequence corresponding to the first terminal includes M+N channel matrices arranged in chronological order, and the M+N channel matrices include the M channel matrices and the N channel matrices.

In a possible implementation, a sending cycle of the first information includes K time units, the M time units and the N time units all belong to the K time units, and K is a positive integer.

In a possible implementation, the processing unit 1010 is configured to generate the first information using a codebook compression method.

In a possible implementation, the transceiver unit 1020 is configured to receive configuration information from the access network device, where the configuration information includes at least one of the following: the feedback cycle of the first information, a value of M, or a value of N.

When the communication apparatus 1000 is configured to implement the function of the access network device in the foregoing method embodiment shown in FIG. 5:
the transceiver unit 1020 is configured to receive first information from the first terminal, where the first information indicates a channel matrix sequence corresponding to the first terminal, the channel matrix sequence corresponding to the first terminal includes M+N channel matrices arranged in chronological order, the M+N channel matrices are in a one-to-one correspondence with M+N time units, M channel matrices among the M+N channel matrices are obtained by performing channel measurement in M time units among the M+N time units, remaining N channel matrices among the M+N channel matrices are obtained through prediction performed based on the M channel matrices, and M and N are positive integers; and receive CSI from the second terminal; and
the processing unit 1010 is configured to determine, based on the channel matrix sequence corresponding to the first terminal and the CSI, a channel matrix sequence corresponding to the second terminal; and send data to the second terminal based on the channel matrix sequence corresponding to the second terminal.

In a possible implementation, the processing unit 1010 is configured to: when determining, based on the channel matrix sequence corresponding to the first terminal and the CSI, the channel matrix sequence corresponding to the second terminal, determine based on the channel matrix sequence corresponding to the first terminal and the CSI, a first time interval, where the first time interval is an interval between a time unit corresponding to a first channel matrix and a time unit corresponding to a 1^{st} channel matrix in the channel matrix sequence corresponding to the first terminal, and the first channel matrix is a channel matrix that is in the channel matrix sequence corresponding to the first terminal and that matches the CSI; and determine, based on the first time interval and the channel matrix sequence corresponding to the first terminal, the channel matrix sequence corresponding to the second terminal.

In a possible implementation, the processing unit 1010 is configured to: when determining, based on the first time interval and the channel matrix sequence corresponding to the first terminal, the channel matrix sequence corresponding to the second terminal, determine, based on the CSI, the first time interval, and the channel matrix sequence corresponding to the first terminal, the channel matrix sequence corresponding to the second terminal.

In a possible implementation, the processing unit 1010 is further configured to determine, based on the channel matrix sequence corresponding to the first terminal, information characteristic information respectively corresponding to the M+N channel matrices; and determine the first channel matrix based on the information characteristic information respectively corresponding to the M+N channel matrices and the CSI.

In a possible implementation, each piece of information characteristic information includes at least one of the following: a channel matrix eigenvalue, a channel beam direction feature, a PMI, or CQI.

For more detailed descriptions of the processing unit 1010 and the transceiver unit 1020, directly refer to the related descriptions in the method embodiment shown in FIG. 5. Details are not described herein again.

As shown in FIG. 11, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, or store input data required by the processor 1110 to run instructions, or store data generated after the processor 1110 runs instructions.

When the communication apparatus 1100 is configured to implement the method shown in FIG. 5, the processor 1110 is configured to implement a function of the processing unit 1010, and the interface circuit 1120 is configured to implement a function of the transceiver unit 1020.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. An example in which the communication apparatus includes a processor and a memory is used. As shown in FIG. 11, the communication apparatus 1100 includes a processor 1110 and a memory 1130. The processor 1110 is coupled to the memory 1130. The memory 1130 stores instructions. When the instructions stored in the memory 1130 are executed by the processor 1110, the communication apparatus 1100 performs the method performed by the access network device or the first terminal in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the access network device or the first terminal. The processor and the storage medium may exist in the access network device or the first terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

In this application, at least one means one or more, and a plurality of means two or more. "And/or" describes an association relationship between associated objects, and indicates that three relationships may exist. For example, A and/or B may indicate the following cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication system, wherein the communication system comprises at least one first terminal, at least one second terminal, and an access network device, the at least one first terminal is located at a front end of a vehicle in a traveling direction, and the at least one second terminal is located within the vehicle;
the first terminal is configured to send first information to the access network device, wherein the first information indicates a channel matrix sequence corresponding to the first terminal, the channel matrix sequence corresponding to the first terminal comprises M+N channel matrices arranged in chronological order, the M+N channel matrices are in a one-to-one correspondence with M+N time units, M channel matrices among the M+N channel matrices are obtained by performing channel measurement in M time units among the M+N time units, remaining N channel matrices among the M+N channel matrices are obtained through prediction performed based on the M channel matrices, and M and N are positive integers;
the second terminal is configured to send channel state information CSI to the access network device;
the access network device is configured to determine, based on the channel matrix sequence corresponding to the first terminal and the CSI, a channel matrix sequence corresponding to the second terminal; and
the access network device is configured to send data to the second terminal based on the channel matrix sequence corresponding to the second terminal.

2. The communication system according to claim 1, wherein the access network device is configured to: determine based on the channel matrix sequence corresponding to the first terminal and the CSI, a first time interval, wherein the first time interval is an interval between a time unit corresponding to a first channel matrix and a time unit corresponding to a 1^{st} channel matrix in the channel matrix sequence corresponding to the first terminal, and the first channel matrix is a channel matrix that is in the channel matrix sequence corresponding to the first terminal and that matches the CSI; and
determine, based on the first time interval and the channel matrix sequence corresponding to the first terminal, the channel matrix sequence corresponding to the second terminal.

3. The communication system according to claim 2, wherein the access network device is configured to: when determining, based on the first time interval and the channel matrix sequence corresponding to the first terminal, the channel matrix sequence corresponding to the second terminal, determine, based on the CSI, the first time interval, and the channel matrix sequence corresponding to the first terminal, the channel matrix sequence corresponding to the second terminal.

4. The communication system according to claim 2 or 3, wherein the access network device is further configured to determine, based on the channel matrix sequence corresponding to the first terminal, information characteristic information respectively corresponding to the M+N channel matrices; and
determine the first channel matrix based on the information characteristic information respectively corresponding to the M+N channel matrices and the CSI.

5. The communication system according to claim 4, wherein each piece of information characteristic information comprises at least one of the following: a channel matrix eigenvalue, a channel beam direction feature, a precoding matrix indicator PMI, or channel quality information CQI.

6. The communication system according to any one of claims 1 to 5, wherein a feedback cycle of the first information comprises K time units, the M+N time units belong to the K time units, and K is a positive integer.

7. The communication system according to any one of claims 1 to 6, wherein the first terminal is configured to generate the first information using a codebook compression method.

8. The communication system according to claim 6, wherein the access network device is further configured to send configuration information to the first terminal, and the configuration information comprises at least one of the following: the feedback cycle of the first information, a value of M, or a value of N.

9. A communication method, wherein the method comprises:
performing, by a first terminal, channel measurement in M time units to obtain M channel matrices, wherein the M channel matrices are in a one-to-one correspondence with the M time units, and M is a positive integer;
determining, by the first terminal, N channel matrices based on the M channel matrices, wherein the N channel matrices are in a one-to-one correspondence with N time units, the N time units are different from the M time units, and N is a positive integer; and
sending, by the first terminal, first information to an access network device, wherein the first information indicates a channel matrix sequence corresponding to the first terminal, the channel matrix sequence corresponding to the first terminal comprises M+N channel matrices arranged in chronological order, and the M+N channel matrices comprise the M channel matrices and the N channel matrices.

10. The method according to claim 9, wherein a feedback cycle of the first information comprises K time units, the M time units and the N time units all belong to the K time units, and K is a positive integer.

11. The method according to claim 9 or 10, further comprising:
generating, by the first terminal, the first information using a codebook compression method.

12. The method according to claim 10, further comprising:
receiving, by the first terminal, configuration information from the access network device, wherein the configuration information comprises at least one of the following: the feedback cycle of the first information, a value of M, or a value of N.

13. A communication method, wherein the method comprises:
receiving, by an access network device, first information from a first terminal, wherein the first information indicates a channel matrix sequence corresponding to the first terminal, the channel matrix sequence corresponding to the first terminal comprises M+N channel matrices arranged in chronological order, the M+N channel matrices are in a one-to-one correspondence with M+N time units, M channel matrices among the M+N channel matrices are obtained by performing channel measurement in M time units among the M+N time units, remaining N channel matrices among the M+N channel matrices are obtained through prediction performed based on the M channel matrices, and M and N are positive integers;
receiving, by the access network device, CSI from a second terminal;
determining, by the access network device based on the channel matrix sequence corresponding to the first terminal and the CSI, a channel matrix sequence corresponding to the second terminal; and
sending, by the access network device, data to the second terminal based on the channel matrix sequence corresponding to the second terminal.

14. The method according to claim 13, wherein determining, by the access network device based on the channel matrix sequence corresponding to the first terminal and the CSI, the channel matrix sequence corresponding to the second terminal comprises:
determining, by the access network device, a first time interval based on the channel matrix sequence corresponding to the first terminal and the CSI, wherein the first time interval is an interval between a time unit corresponding to a first channel matrix and a time unit corresponding to a 1st channel matrix in the channel matrix sequence corresponding to the first terminal, and the first channel matrix is a channel matrix that is in the channel matrix sequence corresponding to the first terminal and that matches the CSI; and
determining, by the access network device based on the first time interval and the channel matrix sequence corresponding to the first terminal, the channel matrix sequence corresponding to the second terminal.

15. The method according to claim 14, wherein determining, by the access network device based on the first time interval and the channel matrix sequence corresponding to the first terminal, the channel matrix sequence corresponding to the second terminal comprises:
determining, by the access network device based on the CSI, the first time interval, and the channel matrix sequence corresponding to the first terminal, the channel matrix sequence corresponding to the second terminal.

16. The method according to claim 14 or 15, further comprising:
determining, by the access network device based on the channel matrix sequence corresponding to the first terminal, information characteristic information respectively corresponding to the M+N channel matrices; and
determining the first channel matrix based on the information characteristic information respectively corresponding to the M+N channel matrices and the CSI.

17. The method according to claim 16, wherein each piece of information characteristic information comprises at least one of the following: a channel matrix eigenvalue, a channel beam direction feature, a PMI, or CQI.

18. A communication apparatus, comprising a unit or a module configured to perform the method according to any one of claims 9 to 17.

19. A communication apparatus, wherein the communication apparatus comprises at least one processor, and the at least one processor is configured to perform the method according to any one of claims 9 to 17.

20. A computer-readable storage medium, wherein the computer-readable storage medium comprises a program, and when the program is run on an apparatus, the apparatus is enabled to perform the method according to any one of claims 9 to 17.

21. A computer program product, wherein the computer program product comprises a program or instructions, and when the program or the instructions are executed by an apparatus, the apparatus is enabled to perform the method according to any one of claims 9 to 17.
